# EUROPEAN PATENT SPECIFICATION

(11) **EP 2 216 240 B1**
(45) Date of publication and mention of the grant of the patent: **19.06.2013**
(21) Application number: 10004599.6
(22) Date of filing: 17.01.2005
(51) Int. Cl.: B62J 35/00, B62J 37/00, F02M 37/10, F02M 37/14

(54) **Straddling-type vehicle**
Grätschsitz-Fahrzeug
Véhicule du type monté à califourchon

(30) Priority: 27.01.2004 JP 2004018814
(43) Date of publication of application: 11.08.2010
(62) Divisional of application: 05703739.2
(73) Proprietor: Yamaha Hatsudoki Kabushiki Kaisha, Shizuoka-ken Shizuoka 438-8501 (JP)
(72) Inventor: Hirano, Fumito, Iwata-shi Shizuoka-ken 438-8501 (JP); Suzuki, Satoshi, Iwata-shi Shizuoka-ken 438-8501 (JP)
(74) Representative: Grünecker, Kinkeldey, Stockmair & Schwanhäusser

(56) References cited:
- JP-A- 55 148 958
- JP-A- 2003 120 454
- US-A- 4 871 041
- US-B1- 6 626 155

## Description

### [Field of the Invention]

This invention relates to a straddling type vehicle such as a motorcycle having a fuel tank.

### [Background Art]

The straddling type vehicle such as a motorcycle includes one provided with a fuel tank with a fuel pump at the inside bottom of the tank to suck fuel from around the bottom (for example, JP-A-2000-72074).

The constitution of attaching this fuel pump is as follows: A fuel pump is attached to a cup opening upward. The fuel suction filter of the fuel pump is placed in the cup. An opening of a diameter smaller than the inside diameter of the cup is made at the bottom of the fuel tank. The main portion of the fuel tank is inserted through the opening into the tank and the cup is secured to the fuel tank. In this way, the fuel in the fuel tank can be sucked out with the fuel pump without being affected with the change in the fuel surface level due to acceleration, deceleration, and attitude of the vehicle when the remaining amount in the fuel tank becomes small.

### [Disclosure of the Invention]

With the conventional method of attaching the fuel pump, because the fuel pump is placed in the fuel tank with the pump axis directed vertically, the pump becomes high. Therefore, the shaping of the tank ceiling is undesirably restricted. With the pump axis directed vertically, when fuel moves back and forth relative to the vehicle, effect of restricting the fuel motion is small. In some cases, fuel cannot be sucked with the fuel pump. Besides, the constitution of attaching at the fuel tank bottom through the opening is complicated. In addition to that, the cup projects out of the fuel tank bottom and sometimes stands in the way of attaching the fuel tank and routing hoses or the like.

This invention has been made In view of the above situation.

The document US 8 828 155 B1 discloses a straddling type vehicle having a fuel pump connected to a side wall of a fuel tank. The fuel pump is disposed In such a manner In the fuel tank that the axis of the fuel pump approximately extends In a vehicle width direction.

The document US 4 871 041 A discloses a straddling type vehicle having a fuel tank straddling a frame element In the vehicle width direction. The fuel tank includes a horizontal arranged surface portion formed on the bottom of the fuel tank. A pump unit is installed In the fuel tank on the horizontal arranged surface portion so that the axis of the pump unit is directed horizontally.

The document JP 2003-120454 A discloses a straddling type vehicle having a fuel pump disposed In a fuel tank near a bottom thereof, wherein the axis of the fuel pump extends In a longitudinal direction of the vehicle.

The document JP 55-148958 A discloses a straddling type vehicle comprising a fuel tank at the front bottom part thereof a fuel pump is disposed to extend in a longitudinal direction of the vehicle.

Therefore, the object of this invention is to provide a straddling type vehicle that makes it possible to securely suck out fuel without being affected with changes in the fuel surface level due to acceleration, deceleration, and attitude of the vehicle.

This object Is solved by the features of claim 1.

Further improvements are laid down In the sub-claims.

The straddling type vehicle according to the invention is a straddling type vehicle having a fuel tank with a built-in fuel pump, in which the fuel pump is placed in the fuel tank with its pump axis directed nearly in the vehicle width direction. A length of the fuel pump In the vehicle width direction is longer than a length thereof In the vehicle longitudinal direction.

With the straddling type vehicle according to the invention, as the fuel pump is placed In the fuel tank with the pump axis directed nearly In the vehicle width direction, it is possible to lower the height of the fuel pump and place the fuel pump inside the fuel tank so that the shaping of the fuel tank ceiling is not affected. Besides, in case fuel moves back and forth as the vehicle accelerates or decelerates, the fuel pump with its axis in longitudinal direction has little effect of restricting the fuel motion. However, with the pump axis nearly in the vehicle width direction, the pump itself has the function of restricting the fuel motion, and fuel can be securely sucked with the fuel pump.

The fuel tank is constituted that straddles the vehicle body frame in the vehicle width direction. Preferably, the vehicle body frame extends obliquely rear downward to be lower toward the rear, and the fuel pump is placed in the rear half of the fuel tank interior.

With the above constitution, because the fuel tank straddles the vehicle body frame in the vehicle width direction, the vehicle body frame extends obliquely rear downward to be lower toward the rear, and the fuel pump is placed within the rear half of the fuel tank interior, fuel is securely sucked with the fuel pump even if remaining amount In the fuel tank is small.

A nearly horizontal surface portion is formed on the fuel tank bottom and the fuel pump is placed on the nearly horizontal surface portion with the pump axis directed nearly horizontally.

As the nearly horizontal surface portion ls formed on the fuel tank bottom an the fuel pump is placed on the nearly horizontal surface portion with the pump axis directed nearly horizontally, it is possible to lower the height of the fuel pump and place the fuel pump inside the fuel tank so that the shaping of the fuel tank ceiling is not affected. Besides, when a pump attachment opening is to be made in the fuel tank bottom wall, the opening can be punched easily in the die stroke direction when press forming the bottom wall, so that manufacture of the tank bottom wall is facilitated.

Preferably, the fuel tank is constituted that has a tunnel-like recess section straddling the vehicle body frame, with the tunnel-like recess section formed only in the front half of the fuel tank interior, and the fuel pump is placed behind the tunnel-like recess section.

With the above constitution, because the tunnel-like recess section is formed only in the front half of the fuel tank interior to straddle the vehicle body frame and the fuel pump is placed behind the tunnel-like recess, fuel is sucked out securely with the fuel pump even when remaining amount is small in the fuel tank.

A more preferable straddling type vehicle according to the invention may be constituted that the pump attaching opening of the fuel tank is made small to the limit of permitting the passage of the fuel pump.

With the above constitution, sealing property is improved by downsizing the pump attaching opening of the fuel tank.

A more preferable straddling type vehicle according to the invention may be constituted that the pump attaching opening is made in the shape of an elongate hole.

Making the pump attaching opening in the shape of elongate hole facilitates insertion of the fuel pump elongate in the direction of the pump axis.

A more preferable straddling type vehicle according to the invention may be constituted that an attaching portion of the fuel pump secured to the pump attaching opening is made small to the limit of permitting closure of the pump attaching opening.

With the above constitution, sealing property is improved by downsizing the pump attaching opening of the fuel tank. At the same time, downsizing the fuel pump attaching portion makes it possible to reduce the area to be set aside for placing the fuel pump in the fuel tank. In particular, the straddling type vehicle according to the invention makes it possible to reduce the area of the nearly horizontal surface portion formed on the fuel tank bottom so as to increase the fuel tank capacity.

A more preferable straddling type vehicle according to the invention may be constituted that the attaching portion is provided on one end side of the pump axis of the fuel pump.

With the above constitution, sealing property is improved by downsizing the pump attaching opening of the fuel tank. At the same time, the fuel pump elongate in the direction of the pump axis can be easily inserted through the pump attaching opening on the other end side where the attaching portion is not provided.

### [Brief Description of Drawings]

This invention will become more apparent with the following detailed explanation in reference to the attached drawings.
FIG. 1 is a sectional side view of an essential part of a fuel tank of a straddling type of vehicle.
FIG. 2 is a sectional plan view of the essential part of the fuel tank of the straddling type of vehicle.
FIG. 3 is a sectional front view of the essential part of the fuel tank of the straddling type of vehicle.
FIG. 4 is a perspective view of the essential part of the fuel tank of the straddling type of vehicle.
FIG. 5 is a plan view showing the direction of placing the fuel pump.
FIG. 6 is another plan view showing the direction of placing the fuel pump of another embodiment.
FIG. 7 is a side view of a fuel pump unit.
FIG. 8 is a bottom view of the fuel pump unit.
FIG. 9 is a right side view of FIG. 8.
FIG. 10 is a sectional plan view of the essential part of the fuel tank in another embodiment of the straddling type of vehicle.
FIG. 11 is a sectional plan view of the essential part of the fuel tank in still another embodiment of the straddling type of vehicle.
FIGs. 12A - 12C are partial sectional side views showing attaching sequence of the fuel pump unit. FIG. 12A shows the state of the fuel pump unit before insertion into the pump attaching opening. FIG. 12B shows the state of the fuel pump unit in the middle of the insertion into the pump attaching opening. FIG. 12C shows the state of the fuel pump unit after the insertion into the pump attaching opening.

### [Best Mode of Embodying the Invention]

Embodiments of the straddling type of vehicle according to the present invention will be described below; however, this invention is not limited to such embodiments. The embodiments show the most preferable forms of the invention and the terms in the present invention are not limited to that used herein.

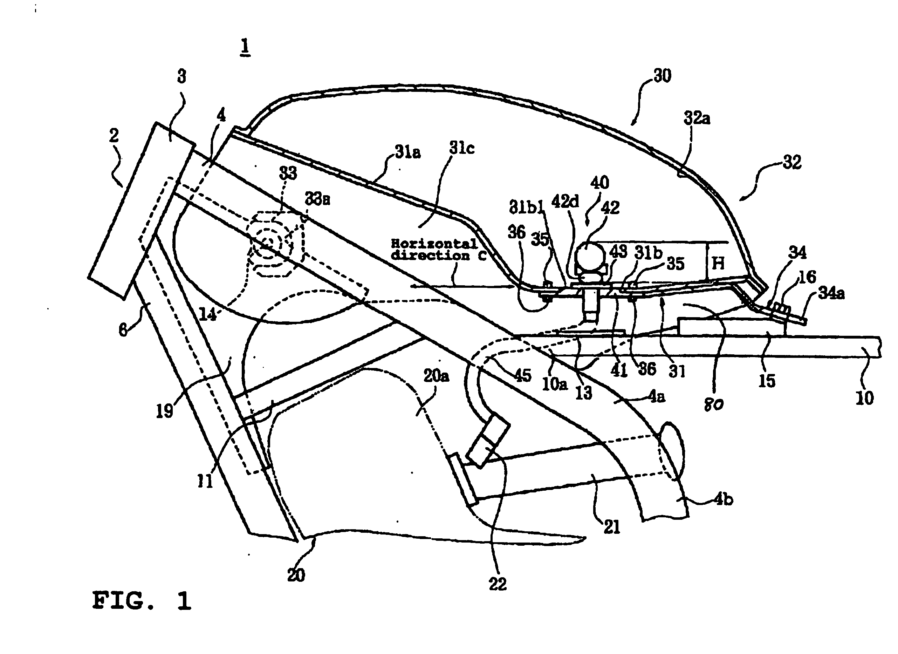

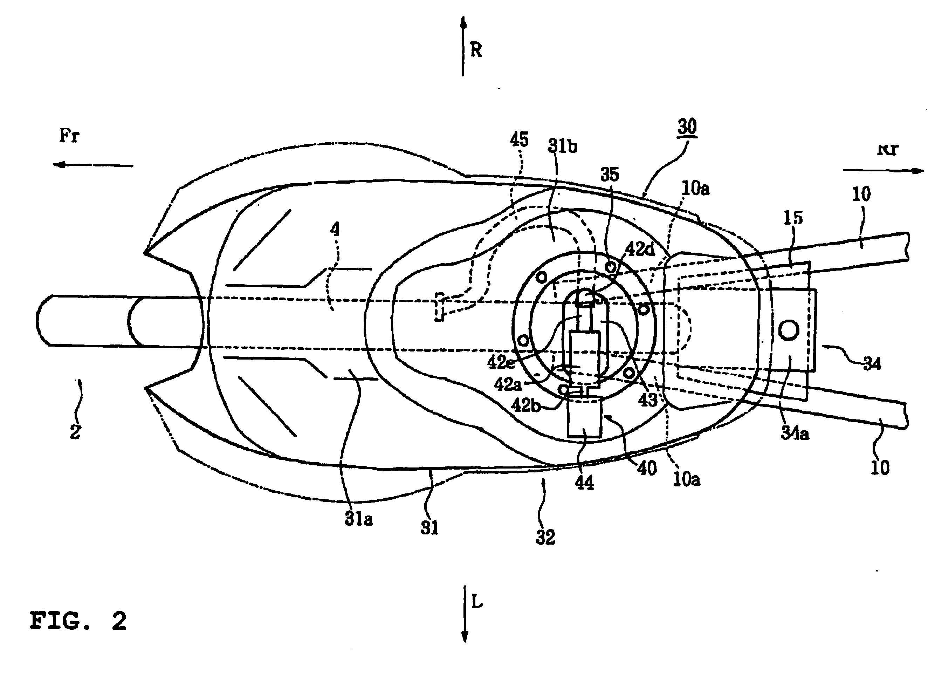

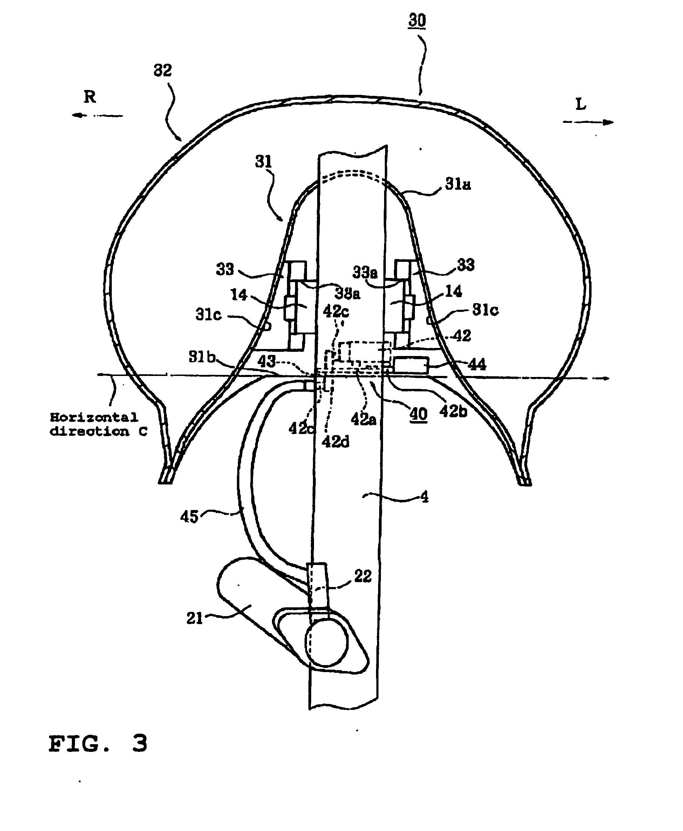

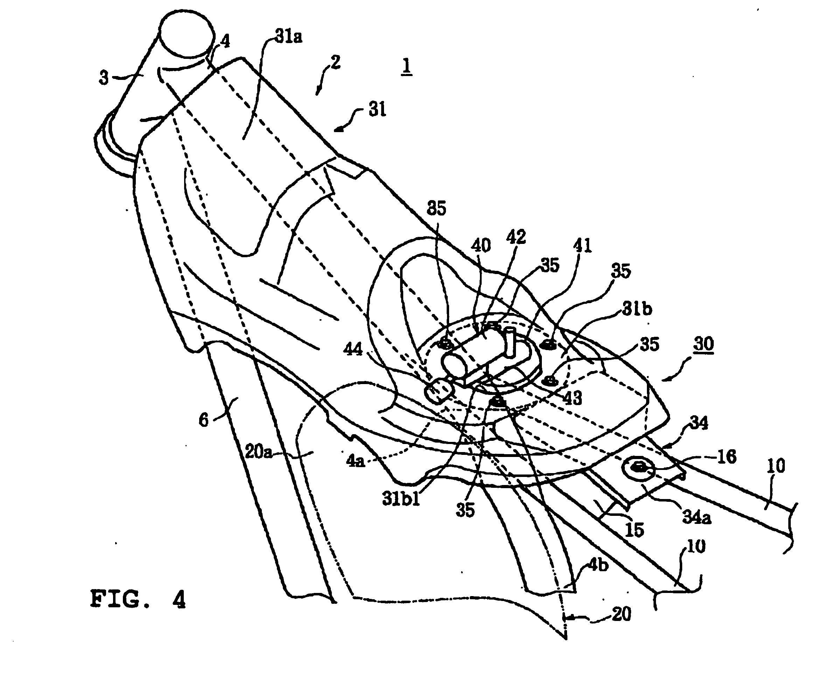

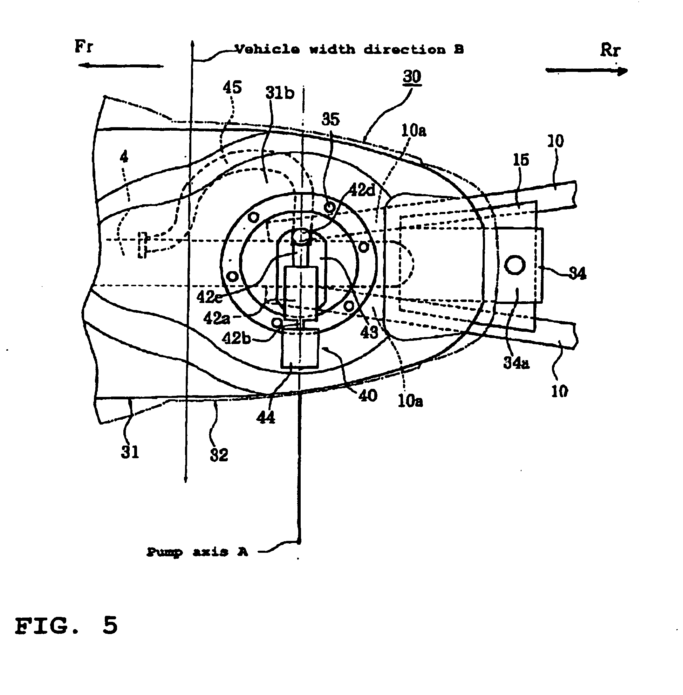

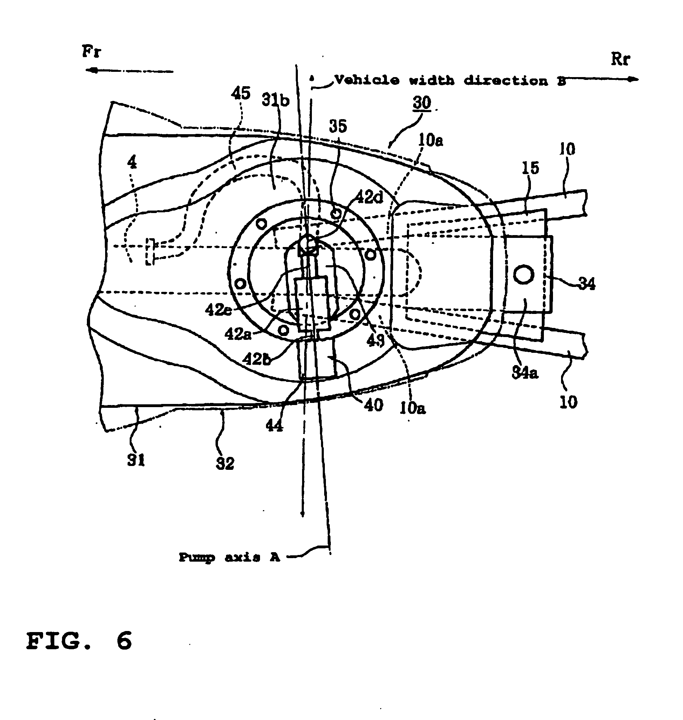

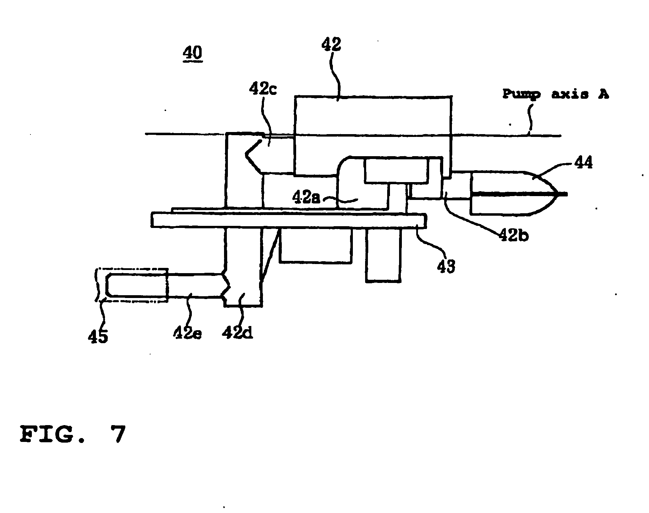

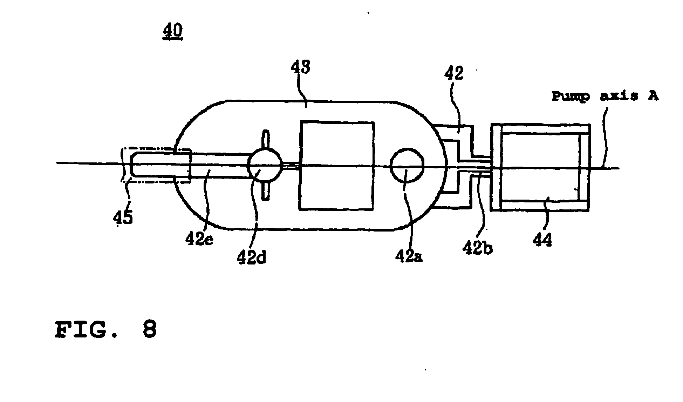

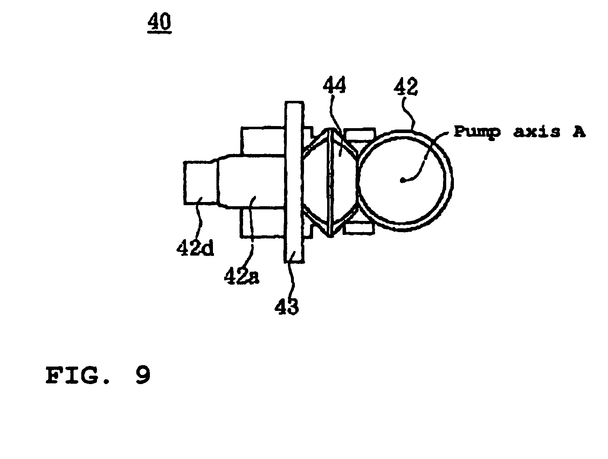

FIG. 1 is a sectional side view of an essential part of a fuel tank of a straddling type of vehicle. FIG. 2 is a sectional plan view of the essential part of the fuel tank of the straddling type of vehicle. FIG. 3 is a sectional front view of the essential part of the fuel tank of the straddling type of vehicle. FIG. 4 is a perspective view of the essential part of the fuel tank of the straddling type of vehicle. FIG. 5 is a plan view showing the direction of placing the fuel pump. FIG. 6 is another plan view showing the direction of placing the fuel pump of another embodiment. FIG. 7 is a side view of a fuel pump unit. FIG. 8 is a bottom view of the fuel pump unit. FIG. 9 is a right side view of FIG. 8. In the embodiments, 'front,' 'rear,' 'left,' 'right,' 'up,' and 'down' are meant as seen from the rider. The symbols Fr denotes forward, Rr rearward, L leftward, and R rightward. Drawings are to be seen in the direction of the symbols.

In these embodiment, a motorcycle is shown as the straddling type of vehicle. In the motorcycle 1, a main frame 4 extends from the upper part to the obliquely lower rear part of a head pipe 3 of a vehicle body frame 2, with the rear part of the main frame 4 curving and extending downward. In this way, the main frame 4 as shown in FIGs. 1 and 5 extends down rearward, through a downward curve portion 4a, to a rear arm pivot portion 4b. A pair of right and left seat rails 10 are connected firmly by welding the connecting portions 10a of the pair of right and left seat rails 10 to the main frame 4 at positions before the curve portion 4a of the main frame 4. A connection plate 13 interconnects the front portions of the paired right and left seat rails 10.

A down tube 6 extends obliquely rear downward from the lower part of the head pipe 3. The rear part of the down tube 6 further curves and extends rear downward to be connected to the lower part of the rear arm pivot portion 4b.

The forward portions of the head pipe 3, the main frame 4, and the down tube 6 are reinforced as they are interconnected with a reinforcing bracket 19. The main frame 4 and the down tube 6 are further reinforced as they are interconnected with a reinforcing member 11 behind the reinforcing bracket 19. An engine 20 is mounted in the space in the vehicle body frame 2 constituted as above, formed with the head pipe 3, the main frame 4, and the down tube 6. An intake pipe 21 is connected to a cylinder 20a of the engine 20. To the intake pipe 21 is attached a fuel injection valve 22 in upward directed attitude. Fuel is injected through the fuel injection valve 22 to supply mixture of air and fuel into the cylinder 20a.

A fuel tank 30 is placed in the front upper parts of the main frame 4 and the paired right and left seat rails 10. The fuel tank 30 straddles the vehicle body frame 2 in the vehicle width direction. A fuel pump unit 40 is provided inside the fuel tank 30. The fuel pump unit 40 includes a fuel pump 42 and a support plate 43. The fuel pump 42 is placed in the fuel tank 30 with its pump axis A directed nearly in the vehicle width direction. In the embodiment shown in FIG. 5, the fuel pump 42 is placed in the fuel tank 30 with its pump axis A directed in the vehicle width direction B. In the embodiment shown in FIG. 6, the direction may be slightly twisted from the vehicle width direction B, with a small tilt angle to the vehicle width direction B. Furthermore, the pump axis A of the fuel pump 42 may be in the longitudinal direction of the vehicle without being restricted with FIGs. 5 and 6.

The fuel tank 30 is made up of a bottom plate 31 and a tank body 32 secured by welding to the bottom plate 31 so as to cover the bottom plate 31. The bottom plate 31 is, as shown in FIGs. 1 and 4, formed with a tunnel-like recess section 31a straddling the main frame 4 constituting the vehicle body frame 2, and with a nearly horizontal surface portion 31b. The tunnel-like recess section 31a is formed only in the front half of the interior of the fuel tank 30, while the nearly horizontal surface portion 31b only in the rear half of the interior of the fuel tank 30.

Front attaching members 33 are secured by welding to the outside opposing surfaces 31c of the tunnel-like recess section 31a of the bottom plate 31. Each of the front attaching members 33 has an engaging portion 33a that is open forward to be attached by engagement with one of attaching brackets 14 secured by welding to the right and left sides of the main frame 4. An attaching plate 34 is secured by welding to the nearly horizontal surface portion 31b. The attaching plate 34 has a rearward extending attaching lug 34a. The attaching lug 34a is secured with a bolt 16 to an attaching bracket 15 of the paired right and left seat rails 10.

A pump attaching opening 31b1 is made in the nearly horizontal surface portion 31b. Cap nuts 35 are secured by welding to six positions around the pump attaching opening 31b1. A pump unit attaching base (fuel pump attaching portion) 41 is attached from under to the pump attaching opening 31b1. Bolts 36 are inserted from under to engage with the cap nuts 35 and tightened.

As for the fuel pump unit 40, as shown in FIGs. 7 to 9, the pump attaching portion 42a of the fuel pump 42 is secured to the support plate 43. The fuel pump 42 is placed so that its suction port 42b and delivery port 42c extend in mutually opposite directions along the pump axis A. A pump filter 44 is provided at the fore-end of the suction port 42b. A takeout pipe 42d is connected to the delivery port 42c. The takeout pipe 42d passes through the support plate 43. A fuel hose connecting portion 42e is formed to extend in the direction of the pump axis A at the fore-end of the takeout pipe 42d. A fuel hose 45 is connected to the fuel hose connecting portion 42e. The fuel hose 45 extends in the direction opposite the suction port 42b in the direction of the pump axis A of the fuel pump 45. The fuel hose 45 curves from right to left above the main frame 4 and is connected from the left side to the fuel injection valve (injector) 22 located below the main frame 4.

As shown in FIGs. 1 and 3, the bottom of the fuel tank 30 is formed with the nearly horizontal surface portion 31b to which is attached the fuel pump 45 with the pump axis A nearly in the horizontal direction C. A control unit and others (not shown) are provided in the space between the tunnel-like recess section 31a and the main frame 4. The fuel pump 42 is placed behind the tunnel-like recess section 31a.

In this embodiment as shown in FIGs. 5 and 6, because the fuel pump 42 is placed in the fuel tank 30 with the pump axis A nearly in the vehicle width direction B, the height H of the fuel pump 42 including the suction port 42b and the delivery port 42c becomes low as shown in FIG. 1. The low height H of the fuel pump 42 makes it possible to place the fuel pump 42 in the fuel tank 30 without affecting shaping of the tank ceiling 32a formed with the tank body 32 by the fuel pump 42.

When fuel moves back and forth as the vehicle accelerates or decelerates, the fuel pump 42, if its pump axis A is directed in the longitudinal direction of the vehicle, has little effect of restricting the fuel motion. However, as shown in FIGs. 5 and 6, placing the fuel pump with its pump axis A directed nearly in the vehicle width direction provides the effect of the pump itself restricting the fuel motion, so that fuel is sucked securely with the fuel pump 42.

The bottom of the fuel tank 30 is formed as shown in FIGs. 1 and 3 with the nearly horizontal surface portion 31b where the fuel pump 42 is placed with its pump axis A directed nearly in the horizontal direction C. As a result, the height H of the fuel pump 42 becomes low so that the fuel pump 42 can be placed in the fuel tank 30 without affecting shaping of the tank ceiling 32a. When the pump attaching opening 31b1 is to be made in the bottom plate 31 forming the fuel tank bottom wall, the opening can be punched easily in the die stroke direction while the bottom plate 31 is press formed, so that manufacture of the tank bottom wall is facilitated.

As shown in FIG. 1, because the main frame 4 constituting the vehicle body frame 2 extends obliquely rear downward to be lower toward the rear, and the fuel pump 42 is placed in the rear half of the interior of the fuel tank 30, fuel is securely sucked with the fuel pump 42 even if remaining amount in the fuel tank 30 is small.

Furthermore, because the tunnel-like recess section 31a of the fuel tank 30 straddling the main frame 4 constituting the vehicle body frame 2 is formed only in the front half in the fuel tank 30, and the fuel pump 42 is placed behind the tunnel-like recess section 31a, fuel is sucked securely with the fuel pump 42 even when remaining amount of fuel is small in the fuel tank 30. The position of the fuel pump 42 as shown in FIG. 1 is nearly above the curved portion 4a of the main frame 4. A space 80 is formed with the curved portion 4a below the bottom plate 31 of the fuel tank 30. The space 80 provides routing and connecting space for the fuel hose 45 protruding below the fuel pump.

As described above, the straddling type of vehicle according to this embodiment makes it possible to securely suck out fuel with the fuel pump 42 without being affected with changes in the fuel surface level due to acceleration, deceleration, and vehicle attitude, simplify constitution for attaching the fuel pump 42 without protrusion of the attaching portion out of the fuel tank 30, and facilitate attachment of the fuel pump 42 and routing of the fuel hose and the like.

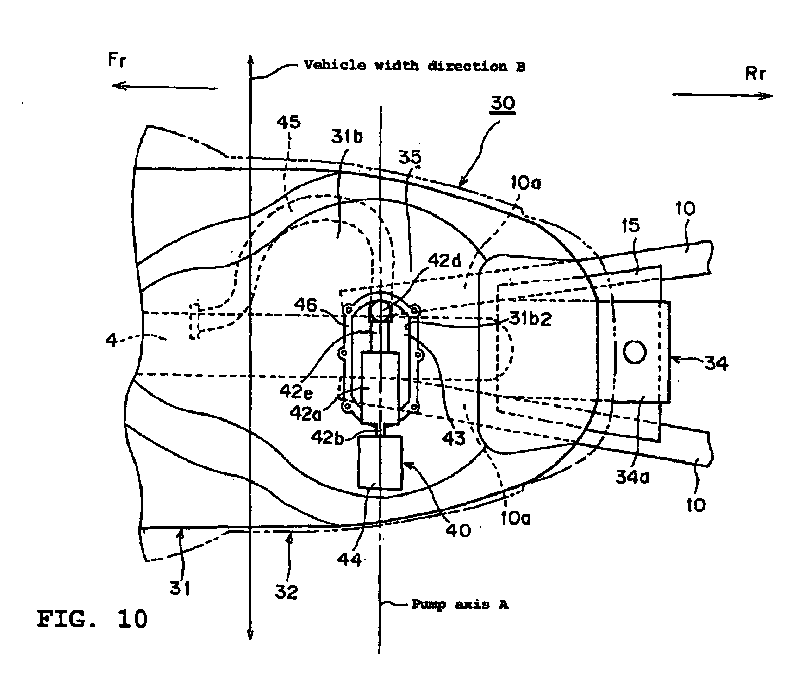

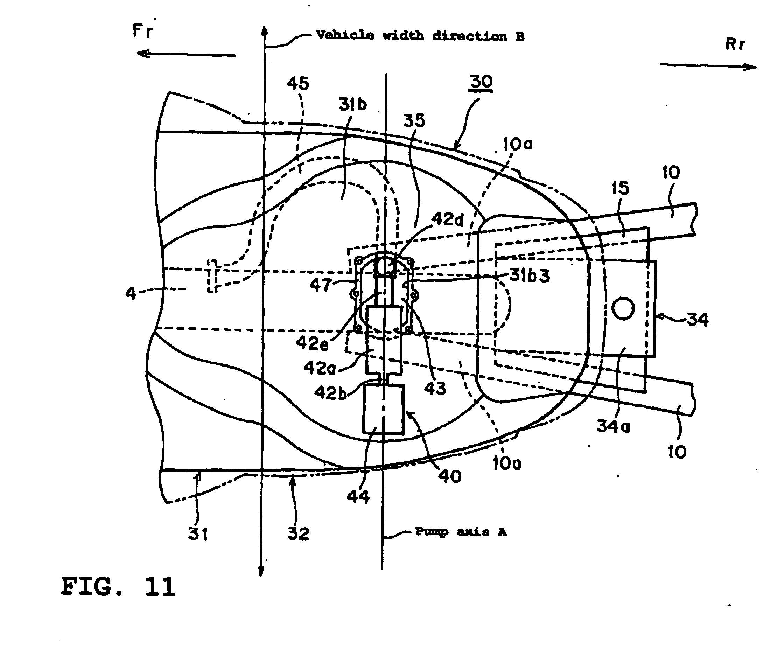

Next, the straddling type of vehicle as another embodiment of the invention is described in reference to FIGs. 10, 11, and 12A to 12C. The same parts as those of the straddling type of vehicle described above in reference to FIGs. 1 to 9 are provided with the same symbols and detailed description is not repeated. In FIGs. 10 and 11, the shape of the pump unit attaching base 46 or 47 is shown in solid lines in order to make clear its shape. Actually, however, the pump unit attaching base 46 or 47 is attached below the nearly horizontal surface portion 31b of the fuel tank 30, and do not present on the nearly horizontal surface portion 31b.

In the straddling type of vehicle of this embodiment shown in FIG. 10, the pump attaching opening 31b2 of the fuel tank 30 is made small to the limit of permitting insertion of the fuel pump unit 40. The shape and the size of the pump attaching opening 31b2 are made in an ellipse approximately identical with the support plate 43 of the pump unit 40.

On the other hand, the pump unit attaching base (fuel pump attaching portion) 46 for attaching the pump unit 40 from under the pump attaching opening 31b2 is made greater by one size than and in an ellipse similar to the pump attaching opening 31b2, and is made small to the limit of permitting closure of the pump attaching opening 31b2. The longitudinal directions of the pump attaching opening 31b2 and the pump unit attaching base 46 are in agreement with the pump axis A of the fuel pump unit 40.

Incidentally, the shape of the pump unit attaching opening 31b2 is not limited to the ellipse but may be changed to elongate holes such as a rectangle with four corners rounded, or an oval. Although the shape of the pump unit attaching opening 31b2 is preferably elongate and round in consideration of ease of passing the fuel pump unit 40 to be described later, it may be a true circle or oval, and may be small to the limit of permitting insertion of the fuel pump unit 40.

Here, as shown in FIG. 11, a pump attaching opening 31b3 of the fuel tank 30 may be made in an ellipse that is further smaller than the pump attaching opening 31b2 described above. In that case, a support plate 43 of nearly the same shape and size as the pump attaching opening 31b3 is provided on one end side of the pump axis A of the fuel pump unit 40. Furthermore, a pump unit attaching base (fuel pump attaching portion) 47 greater by one size than and similar in shape to the pump attaching opening 31b3 is provided on the reverse side of the support plate 43.

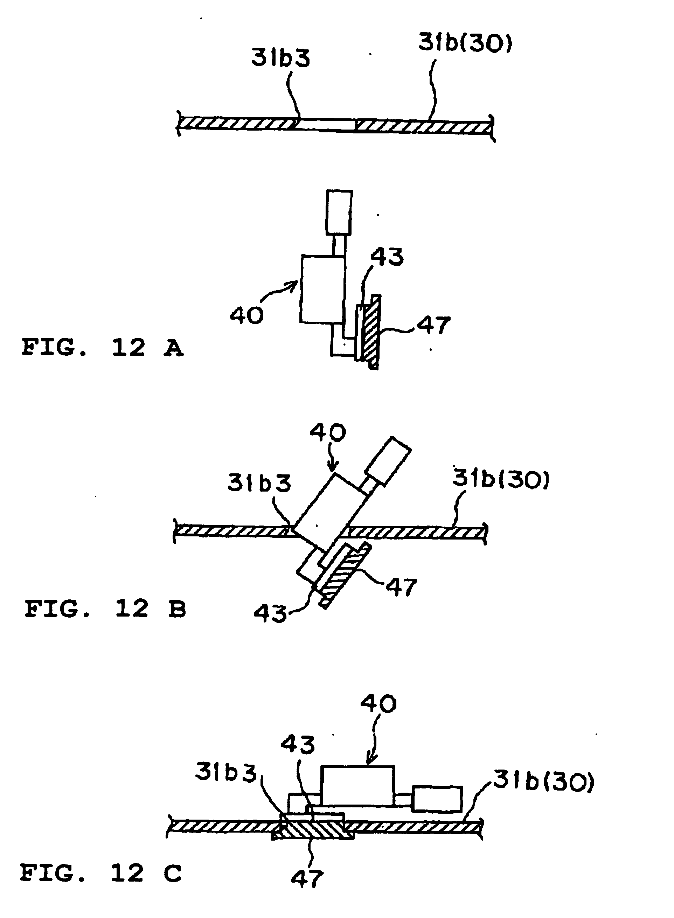

Sequence of attaching the above fuel pump unit 40 in the straddling type of vehicle of this embodiment shown in FIG. 11 is described below. First, as shown in FIG. 12A, the fuel pump unit 40 elongate in the direction of the pump axis A is inserted, from the other end side at which the pump unit attaching base 47 is not provided, into the pump attaching opening 31b3. Next, as shown in FIG. 12B, the pump unit 40, while it is being turned, is further inserted into the pump attaching opening 31b3. After that, as shown in FIG. 12C, the pump unit attaching base 47 is secured under the pump attaching opening 31b3.

The above embodiment of the straddle type of vehicle shown in FIGs. 10 or 11 makes it possible to improve sealing property by downsizing the pump attaching opening 31b2 or 31b3 of the fuel tank 30 to the limit of permitting insertion of the fuel pump unit 40.

Making the pump attaching opening 31b2 or 31b3 in the elongate hole shape facilitates insertion of the fuel pump unit 40 elongate in the direction of the pump axis A.

Downsizing the pump unit attaching base 46 or 47 secured to the pump attaching opening 31b2 or 31b3 makes it possible to increase the capacity of the fuel tank 30 by downsizing the area of the nearly horizontal surface portion 31b formed on the bottom of the fuel tank 30.

In addition to the above, like the straddling type of vehicle of the embodiment shown in FIG. 11, in case the pump unit attaching base 47 is made small to the limit of permitting closure of the pump attaching opening 31b3 and located on one end side of the pump axis A of the fuel pump unit 40, the pump unit 40 may be easily inserted from the other end side into the pump attaching opening 31b3.

### [Industrial Applicability]

This invention may be applied to the straddling type of vehicle such as the motorcycle and motor-tricycle having a fuel tank with a built-in fuel pump to suck out and supply fuel through a fuel pump to an engine.

The invention is related to a straddling-type vehicle having a fuel tank straddling a vehicle body frame in the vehicle width direction and with a built-in fuel pump, wherein a nearly horizontal surface portion is formed on the bottom surface of the fuel tank, and the fuel pump is placed on the nearly horizontal surface portion with the pump axis being directed nearly horizontally.

Further, the vehicle body frame extends obliquely rear downward to be lower toward the rear, and the fuel pump is placed in the rear half of the fuel tank interior.

Preferably further, the fuel tank has a tunnel-like recess section straddling the vehicle body frame, with the tunnel-like recess section formed only in the front half of the fuel tank interior, and the fuel pump is placed behind the tunnel-like recess section.

The fuel pump is placed in the fuel tank with the pump axis directed in or nearly in the vehicle width direction.

Preferably the present invention also refers to a pump attaching opening of the fuel tank, which is downsized to the limit of permitting insertion of the fuel pump.

Further, the pump attaching opening is made in an elongate hole shape.

Preferably, an attaching portion of the fuel pump secured to the pump attaching opening is downsized to the limit of permitting closure of the pump attaching opening.

Still further preferably, the attaching portion is provided on one end side of the pump axis of the fuel pump.

## Claims

1. Straddling-type vehicle having a fuel tank (30) straddling a vehicle body frame in a vehicle width direction and with a built-in fuel pump (42), wherein the fuel pump (42) is placed in the fuel tank (30) with the pump axis (A) directed in or nearly in the vehicle width direction (B), a nearly horizontal surface portion (31 b) is formed on a bottom surface of the fuel tank (30) and the fuel pump (42) is placed on the nearly horizontal surface portion (31 b) with the pump axis (A) being directed nearly horizontally, and
wherein a length of the fuel pump (42) in the vehicle width direction (B) is longer than a length thereof in a vehicle longitudinal direction.

2. Straddling-type vehicle according to claim 1, wherein the vehicle body frame extends obliquely rear downward to be lower toward the rear, and the fuel pump (42) is placed in a rear half of a fuel tank interior.

3. Straddling-type vehicle according to claim 2, wherein the fuel tank (30) has a tunnel-like recess section (31a) straddling the vehicle body frame, with the tunnel-like recess section (31a) formed only in a front half of the fuel tank interior, and the fuel pump (42) is placed behind the tunnel-like recess section (31a).

4. Straddling-type vehicle according to one of the claims 1 to 3, wherein a pump attaching opening (31b1, 31b2, 31b3) of the fuel tank (30) is downsized to the limit of permitting insertion of the fuel pump (42).

5. Straddling-type vehicle according to claim 4, wherein the pump attaching opening (31b1, 31b2) is made in an elongate hole shape.

6. Straddling-type vehicle according to claim 4 or 5, wherein an attaching portion (43) of the fuel pump (42) secured to the pump attaching opening (31b1, 31b2, 31b3) is downsized to the limit of permitting closure of the pump attaching opening (31b1, 31b2, 31b3).

7. Straddling-type vehicle according to claim 6, wherein the attaching portion (43) is provided on one end side of the pump axis (A) of the fuel pump (42).

## Patentansprüche

1. Fahrzeug vom Spreizsitz- Typ mit einem Kraftstofftank (30), der einen Fahrzeugkarosserierahmen in einer Richtung der Breite des Fahrzeuges mit einer eingebauten Kraftstoffpumpe (42) überspreizt, wobei die Kraftstoffpumpe (42) in dem Kraftstofftank (30) mit der Pumpenachse (A), gerichtet in oder nahe in die Richtung der Breite (B) des Fahrzeuges, angeordnet ist, ein nahezu horizontaler Oberflächenabschnitt (31 b) an einer Bodenoberfläche des Kraftstofftanks (30) gebildet ist und die Kraftstoffpumpe (42) auf einem nahezu horizontalen Oberflächenabschnitt (31 b) mit der Pumpenachse (A), die nahezu horizontal ausgerichtet ist, angeordnet ist und
wobei eine Länge der Kraftstoffpumpe (42) in der Richtung der Breite (B) des Fahrzeuges länger als eine Länge derselben in einer Richtung der Fahrzeuglänge ist.

2. Fahrzeug vom Spreizsitz- Typ nach Anspruch 1, wobei sich der Fahrzeugkarosserierahmen schräg nach hinten abwärts erstreckt, um in Richtung nach hinten niedriger zu sein, und wobei die Kraftstoffpumpe (42) in einer hinteren Hälfte eines Kraftstofftankinneren angeordnet ist.

3. Fahrzeug vom Spreizsitz- Typ nach Anspruch 2, wobei der Kraftstofftank (30) einen tunnelartigen Aussparungsabschnitt (31 a) hat, der den Fahrzeugkarosserierahmen überspreizt, mit dem tunnelartigen Aussparungsabschnitt (31 a), gebildet nur in einer vorderen Hälfte des Kraftstofftankinneren, und wobei die Kraftstoffpumpe (42) hinter dem tunnelartigen Aussparungsabschnitt (31 a) angeordnet ist.

4. Fahrzeug vom Spreizsitz- Typ nach einem der Ansprüche 1 bis 3, wobei eine Pumpenverbindungsöffnung (31 b1, 31 b2, 31 b3) des Kraftstofftanks (30) bis zu der Grenze, die das Einsetzen der Kraftstoffpumpe (42) gestattet, verkleinert ist.

5. Fahrzeug vom Spreizsitz- Typ nach Anspruch 4, wobei die Pumpenverbindungsöffnung (31b1, 31 b2, 31 b3) in einer Langlochform hergestellt ist.

6. Fahrzeug vom Spreizsitz- Typ nach Anspruch 4 oder 5, wobei ein Verbindungsabschnitt (43) der Kraftstoffpumpe (42), befestigt an der Pumpenverbindungsöffnung (31b1, 31 b2, 31 b3), bis zu der Grenze, die das Schließen der Pumpenverbindungsöffnung (31b1, 31b2, 31b3) gestattet, verkleinert ist.

7. Fahrzeug vom Spreizsitz- Typ nach Anspruch 6, wobei der Verbindungsabschnitt (43) an einer Endseite der Pumpenachse (A) der Kraftstoffpumpe (42) angeordnet ist.

## Revendications

1. Véhicule de type monté à califourchon possédant un réservoir à carburant (30) enjambant un châssis de véhicule dans le sens de la largeur du véhicule et équipé d'une pompe à carburant intégrée (42), dans lequel la pompe à carburant (42) est placée dans le réservoir à carburant (30), l'axe de pompe (A) étant dirigé selon une orientation identique ou proche de la direction de la largeur du véhicule (B), une partie de surface disposée de manière quasiment horizontale (31b) est formée sur une surface inférieure du réservoir à carburant (30) et la pompe à carburant (42) est placée sur la partie de surface disposée de manière quasiment horizontale (31b), l'axe de pompe (A) étant dirigé pratiquement à l'horizontale, et
dans lequel une longueur de la pompe à carburant (42) dans la direction de la largeur du véhicule (B) est supérieure à sa longueur dans une direction longitudinale du véhicule.

2. Véhicule de type monté à califourchon selon la revendication 1, dans lequel le châssis de véhicule se prolonge de manière oblique en direction de l'arrière et vers le bas, pour s'abaisser en direction de l'arrière, et la pompe à carburant (42) est placée dans la moitié arrière de l'intérieur du réservoir à carburant.

3. Véhicule de type monté à califourchon selon la revendication 2, dans lequel le réservoir à carburant (30) possède une section en retrait en forme de tunnel (31a), enjambant le châssis de véhicule, la section en retrait en forme de tunnel (31a) étant réalisée uniquement dans la moitié avant de l'intérieur du réservoir à carburant, et la pompe à carburant (42) étant placée derrière la section en retrait en forme de tunnel (31a).

4. Véhicule de type monté à califourchon selon l'une quelconque des revendications 1 à 3, dans lequel une ouverture de fixation de pompe (31b1, 31b2, 31b3) du réservoir à carburant (30) est réduite en dimensions jusqu'à la limite permettant l'insertion de la pompe à carburant (42).

5. Véhicule de type monté à califourchon selon la revendication 4, dans lequel l'ouverture de fixation de pompe (31b2, 31b2) possède la forme d'un orifice allongé.

6. Véhicule de type monté à califourchon selon l'une quelconque des revendications 4 ou 5, dans lequel une partie de fixation (53) de la pompe à carburant (42) fixée à l'ouverture de fixation de pompe (31b1, 31b2, 31b3) est réduite en dimensions jusqu'à la limite permettant la fermeture de l'ouverture de fixation de pompe (31b1, 31b2, 31b3).

7. véhicule de type monté à califourchon selon la revendication 6, dans lequel la partie de fixation (43) est placée sur un côté d'extrémité de l'axe de pompe (A) de la pompe à carburant (42).
